# EUROPÄISCHE PATENTSCHRIFT

(11) **EP 0 864 251 B1**
(45) Veröffentlichungstag und Bekanntmachung des Hinweises auf die Patenterteilung: **07.08.2002**
(21) Anmeldenummer: 97122005.8
(22) Anmeldetag: 13.12.1997
(51) Int. Cl.: A01F 15/07

(54) **Rundballenpresse**
Round baler
Presse à bailles rondes

(30) Priorität: 12.03.1997 DE 19710076
(43) Veröffentlichungstag der Anmeldung: 16.09.1998
(73) Patentinhaber: Usines Claas France, 57050 Metz Woippy (FR)
(72) Erfinder: Roth, Arsene, 57050 Metz (FR)
(74) Vertreter: Weeg, Thomas

(56) Entgegenhaltungen:
- WO-A-92/05685
- DE-A- 4 308 646
- DE-U- 8 325 223
- US-A- 4 969 315

## Beschreibung

Die Erfindung bezieht sich auf eine Rundballenpresse mit einem Hauptrahmen, Fahrwerk, Aufnahme- und Zuführeinrichtungen für Preßgut, Antrieben sowie einer aufklappbaren Preßkammer, die seitlich durch feststehende Wände und umfangsseitig zumindest teilweise durch endlos umlaufende Riemen und/oder Walzen begrenzt ist, wobei die Riemen durch drehbar gelagerte Umlenkwalzen geführt sind, und einer Leitvorrichtung für Bindemittel, die aus flexiblem Material besteht und eine der Umlenkwalzen zumindest teilweise umschlingt.

Eine solche Rundballenpresse ist beispielsweise in der DE-A-43 08 646 beschrieben. Bei der bekannten Rundballenpresse wird nach Fertigstellung des gepreßten Rundballens die Erntegutzufuhr unterbrochen und der gepreßte Rundballen wird sich weiter drehend mit Bindemittel wie Garn, Netz, Folie oder anderem geeigneten Material umwickelt, um damit nach dem Auswerfen des Ballens aus der Rundballenpresse ein Auflösen des Ballens zu verhindern. Das Bindemittel muß, bevor es von dem sich drehenden Erntegutballen und den eventuell vorhandenen umlaufenden Riemen mitgenommen werden kann, zumindest teilweise um eine Preß- oder Umlenkwalze herumgeführt werden. Um das Bindemittel um die Preßoder Umlenkwalze herumführen zu können, hat es sich bewährt, eine Leitvorrichtung vorzusehen, die das Bindemittel an die Preß- oder Umlenkwalze heranführt und über einen Teil des Umfangskreises der Preß- oder Umlenkwalze andrückt, um ein Erfassen und Mitnehmen des Bindemittels durch die Preß- oder Umlenkwalze zu ermöglichen. Herkömmlich besteht eine solche Leitvorrichtung aus einem Stahlblech. Ein Stahlblech weist jedoch den Nachteil auf, nicht flexibel auf Unwuchten der Preß- oder Umlenkwalze oder auf Materialanhäufungen des Bindemittels reagieren zu können. Mit dem Begriff "flexibel" ist in diesem Zusammenhang gemeint, daß sich ein flexibles Material zwar einer gegebenen Form passiv anpassen kann, sich dabei aber im wesentlichen unelastisch verhält, sich dabei als nicht in einem erheblichen Maße in zumindest eine Richtung ausdehnt. Das Stahlblech als Leitvorrichtung ist weder flexibel noch elastisch. Auch wenn Profilstäbe wendelförmig zur Reinigung der Innenseite der Riemen auf der Oberfläche einer Umlenkwalze oder eine Profilierung zur besseren Unterstützung der Förderwirkung einer Preßwalze umfangsseitig auf den jeweiligen Oberflächen angebracht sind, können Leitvorrichtung und jeweilige Walze nicht optimal zusammenwirken, um das Bindemittel einzuziehen. Der Abstand einer Leitvorrichtung aus Stahlblech von den Preßwalzen oder den über die Umlenkwalze umlaufenden Riemen muß in diesen Fällen größer gewählt werden, als es für eine sichere Einzugsfunktion wünschenswert wäre.

In der DE-A-43 08 646 ist allgemein vorgeschlagen, die Leitvorrichtung aus flexiblem Material herzustellen. Versuche haben jedoch ergeben, daß flexibles Material einerseits nicht ausreichend standfest ist, um dem Verschleiß insbesondere im Umschlingungsbereich der Preßbzw. Umlenkwalze länger standhalten zu können, und andererseits bei elastischer Ausstattung durch eine rutschhemmende Wirkung der Oberfläche des elastischen Materials die Sicherheit des Einzugs des Bindemittels beeinträchtigt werden kann.

Es ist Aufgabe der vorliegenden Erfindung, eine Leitvorrichtung für Bindemittel so auszugestalten, daß sie einerseits elastisch ist, andererseits jedoch eine hohe Standfestigkeit aufweist.

Die Aufgabe wird erfindungsgemäß gelöst, indem die flexible Leitvorrichtung zusammengesetzt ist aus zumindest einem Materialstück, das mindestens in Längsrichtung der Leitvorrichtung eine Längselastizität aufweist, sowie aus zumindest einem weiteren im Förderweg des Bindemittels angebrachten flexiblen Materialstück. Bevorzugt weist die Materialoberfläche des weiteren flexiblen Materialstücks geringere Reibwerte als das andere Materialstück auf. Bei dem Materialstück, das mindestens in Längsrichtung der Leitvorrichtung eine Längselastizität aufweist, kann es sich beispielsweise um ein flaches, eventuell vulkanisiertes Gummistück oder ein elastisches Gewebe wie beispielsweise Linatex handeln. Das weitere flexible Materialstück, dessen Materialoberfläche geringere Reibwerte aufweist, kann aus besonders reiß- und verschleißfesten Kunstfasern, wie beispielsweise ein glattes 2-pli-Gewebe, die zusätzlich mit einer gleitfördernden Beschichtung versehen sein können, wie beispielsweise eine Teflon-Beschichtung, bestehen. Vorzugsweise wird das flexible Materialstück mit den geringeren Reibwerten im Umschlingungsbereich der Walzen angeordnet, weil gerade dort sowohl ein hoher Verschleiß entsteht als auch das Bindemittel nicht unnötig abgebremst werden darf, um einen sicheren Einzug zu gewährleisten. Das zumindest in Längsrichtung der Leitvorrichtung längselastische Materialstück ist vorzugsweise an einer von der Umlenk- oder Preßwalze entfernteren Stelle positioniert, wo der Verschleiß und die Bremswirkung auf das zugeführte Bindemittel geringer ist. Die beschriebene Kombination der zumindest zwei Materialstücke erlaubt es, die Leitvorrichtung so auszugestalten, daß sie an den besonders hoch beanspruchten Stellen ausreichend verschleißfest ausgelegt sein, durch die an anderer Stelle angebrachten, jedoch mit diesem Materialstück verbundenen elastischen Materialstücke ausreichend elastisch und flexibel auf Oberflächendifferenzen der Preß- oder Umlenkwalze reagieren kann. Bei dieser Anordnung kann die Leitvorrichtung eng an der Oberfläche der um die Umfangswalze umlaufenden Riemen bzw. die Preßwalze aufliegen und das Bindemittel dementsprechend fest auf die bewegten Oberflächen angedrückt werden, was zu einem sicheren Ergreifen und Weiterbefördern des Bindemittels in die Preßkammer und den zu bindenden Ballen führt. Weitere bevorzugte Ausgestaltungen der Erfindung sind in den Unteransprüchen beschrieben.

Die Erfindung ist im folgenden in einem Ausführungsbeispiel beschrieben. Es zeigen:

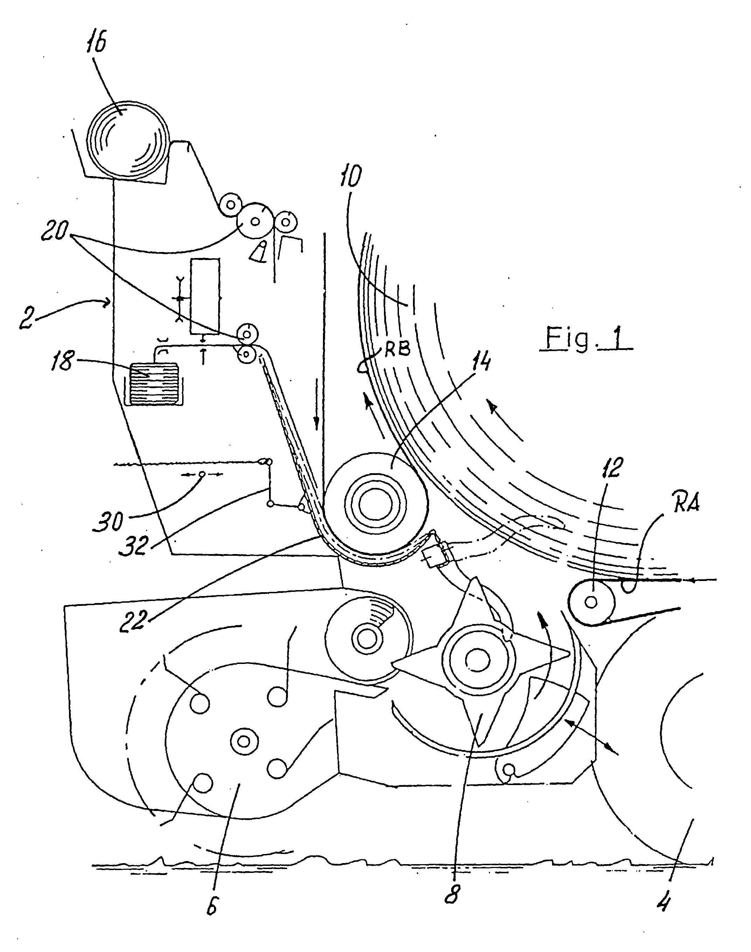

- Fig. 1: eine schematische Darstellung einer Rundballenpresse in der Seitenansicht,
- Fig. 2: eine perspektivische Darstellung einer Leitvorrichtung

Die Rundballenpresse 2 mit Hauptrahmen, Rädern 4, einer Aufnahmevorrichtung 6 und einer Schneideinrichtung 8 für das Erntegut weist einen Preßraum 10 auf, in den das Erntegut hineinbefördert wird. Im Preßraum 10 ist ein Preßgutballen stilisiert angedeutet, der den Preßraum 10 ausfüllt. Im Ausführungsbeispiel wird der Preßraum 10 von Riemen RA, RB umfangsseitig begrenzt. Die Riemen werden von Umlenkwalzen 12, 14 geführt und von einer nicht näher gezeigten Spanneinrichtung vorgespannt. Anstelle der im Ausführungsbeispiel gezeigten Riemen kann der Preßraum umfangsseitig auch von etwa kreisförmig beabstandet zueinander angeordneten Preßwalzen oder von einer Riemen-/Preßwalzenkombination begrenzt sein. Als Bindemittel sind im Ausführungsbeispiel eine Rolle 16 aus bahnartigem Raschelgewirk als Netzmaterial oder aus Folie sowie ein Bindegarnknäuel 18 gezeigt. Das Bindemittel 16, 18 wird jeweils über Abzugs- und Transporteinrichtungen 20 aus dem Vorrat in Richtung einer Öffnung zur Preßkammer 10 gefördert. Damit der Einzug des Bindemittels 16, 18 in die Preßkammer 10 sicherer gelingt, ist im Förderweg des Bindemittels 16, 18 eine Leitvorrichtung 22 angebracht, die das Bindemittel 16, 18 in Kontakt bringt mit der Oberfläche der um die Umlenkwalze 14 umlaufenden Riemen. Zusätzlich zur Förderwirkung der Abzugs- und Transporteinrichtungen 20 zieht nun auch die Umlenkwalze 14 entlang ihres Umfangskreises, in dem sie mittelbar über die Riemen RB mit dem Bindemittel 16, 18 in Kontakt ist, das Bindemittel in die Preßkammer 10 ein, wo es dann zwischen Oberfläche der Riemen RB und dem im Preßraum 10 befindlichen Preßgutballen eingeklemmt und weiterbefördert wird. Außerdem ist der motorische Stellantrieb 30 erkennbar, der auf ein Verstellgestänge 32 wirkt und bei Betätigung die Leitvorrichtung 22 straff anziehen oder wieder lösen kann. Die Verstellung kann automatisch bei oder kurz nach Betätigung der Abzugs- und Transporteinrichtungen 20 angezogen und nach Beendigung des Bindevorgangs wieder gelöst werden, um den reibungsbedingten Verschleiß an der Leitvorrichtung 22 auf ein Mindestmaß zu reduzieren. Eine Verstellung während des Einlaufs des Bindemittels 16, 18 bewirkt zudem, daß das Bindemittel 16, 18 gut in den Spalt zwischen Leitvorrichtung 22 und Walze 14 eingefördert werden kann, während es nach Anziehen der Leitvorrichtung 22 dann sicher von der Walze 14 mitgenommen wird.

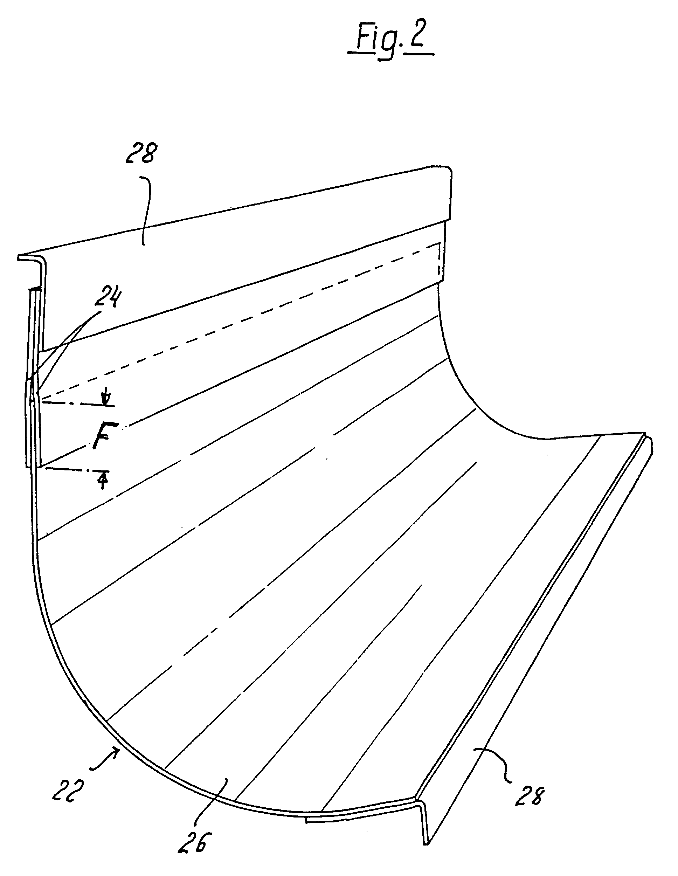

In Figur 2 ist eine detaillierte Darstellung der Leitvorrichtung 22 zu sehen. Die Leitvorrichtung 22 ist zusammengesetzt aus einem zumindest in Längsrichtung der Leitvorrichtung 22 längselastischen Materialstück 24 und einem weiteren, im wesentlichen unelastischen flexiblen Materialstück 26. Im gekennzeichneten Bereich F überlappen die Materialstücke 24, 26 einander zu Befestigungszwecken, wobei im Ausführungsbeispiel das Materialstück 24 doppellagig ausgeführt ist und das Materialstück 26 im Bereich F auf seiner Vorder- und Rückseite von jeweils einer Lage des Materialstücks 24 überlappt ist. Die Befestigung der beiden Materialstücke 24, 26 kann auf sich bekannte Art und Weise, wie beispielsweise Nieten, Kleben, etc. erfolgen. Endseitig sind die Materialstücke 24, 26 jeweils auf ebenfalls bekannte Art an Winkelprofilen 28 befestigt, die ihrerseits in der Rundballenpresse befestigt werden können.

## Patentansprüche

1. Rundballenpresse mit einem Hauptrahmen (2), Fahrwerk (4), Aufnahme- und Zuführeinrichtungen (6) für Pressgut, Antrieben sowie einer aufklappbaren Presskammer (10), die seitlich durch feststehende Wände und umfangsseitig zumindest teilweise durch endlos umlaufende Riemen (RB) und/oder Walzen begrenzt ist, wobei die Riemen (RB) durch drehbar gelagerte Umlenkwalzen (12, 14) geführt sind, und einer Leitvorrichtung (22) für Bindemittel (16, 18), die aus flexiblem Material besteht und eine der Umlenkwalzen (14) zumindest teilweise umschlingt,
**dadurch gekennzeichnet,**
**dass** die Leitvorrichtung(22) zusammengesetzt ist aus zumindest einem Materialstück (24), das mindestens in Längsrichtung der Leitvorrichtung (22) eine Längselastizität aufweist, sowie aus zumindest einem weiteren im Förderweg des Bindemittels (16, 18) angebrachten flexiblen Materialstück (26).

2. Rundballenpresse nach Anspruch 1,
**dadurch gekennzeichnet,**
**daß** die Materialoberfläche des flexiblen Materialstücks (26) einen geringeren Oberflächen-Reibwert als das andere Materialstück (24) aufweist.

3. Rundballenpresse nach Anspruch 1 oder 2,
**dadurch gekennzeichnet,**
**daß** das flexible Materialstück (26) mit den geringeren Reibwerten aus einem besonders reiß- und/oder verschleißfesten Kunstfasergewebe besteht.

4. Rundballenpresse nach Anspruch 3,
**dadurch gekennzeichnet,**
**daß** das flexible Materialstück (26) im wesentlichen unelastisch ist.

5. Rundballenpresse nach Ansprüchen 3 oder 4,
**dadurch, gekennzeichnet,**
**daß** das flexible Materialstück (26) insgesamt oder dessen Gewebefasern reibwertmindernd beschichtet sind.

6. Rundballenpresse nach einem der vorhergehenden Ansprüche,
**dadurch gekennnzeichnet,**
**daß** das mindestens in Längsrichtung der Leitvorrichtung (22) längselastische Materialstück (24) aus Gummi oder einem sonstigen elastischen Gewebe besteht.

7. Rundballenpresse nach einem der vorhergehenden Ansprüche,
**dadurch gekennzeichnet,**
**daß** die anstoßenden Bereiche der Materialstücke (24, 26) der Leitvorrichtung (22) überlappend aneinander befestigt sind.

8. Rundballenpresse nach einem der vorhergehenden Ansprüche,
**dadurch gekennzeichnet,**
**daß** die Materialstücke (24, 26) endseitig an Winkelprofilen (28) befestigt sind.

9. Rundballenpresse nach einem der vorhergehenden Ansprüche,
**dadurch gekennzeichnet,**
**daß** das flexible Materialstück (26) im Umschlingungsbereich der Walze (14) angeordnet ist.

10. Rundballenpresse nach einem der vorhergehenden Ansprüche,
**dadurch gekennzeichnet,**
**daß** die Leitvorrichtung (22) motorisch anstellbar ist.

11. Rundballenpresse nach einem der vorhergehenden Ansprüche,
**dadurch gekennzeichnet,**
**daß** die Leitvorrichtung (22) nur zeitweise spannbar ist.

## Claims

1. A round bale press comprising a main frame (2), a chassis (4), pick-up and feed devices (6) for material to be pressed, drives and a pressing chamber (10) which can be pivoted open and which is delimited laterally by fixed walls and peripherally at least in part by endlessly circulating belts (RB) and/or rollers, wherein the belts (RB) are guided by rotatably supported direction-changing rollers (12, 14), and a guide arrangement (22) for binding means (16, 18), which comprises flexible material and extends at least partially around one of the direction-changing rollers (14), **characterised in that** the guide arrangement (22) is composed of at least one portion of material (24) which has longitudinal elasticity at least in the longitudinal direction of the guide arrangement (22) and at least one further flexible portion of material (26) which is disposed in the conveyor path of the binding means (16, 18).

2. A round bale press according to claim 1 **characterised in that** the surface of the flexible portion (26) of material has a lower coefficient of surface friction than the other portion (24) of material.

3. A round bale press according to claim 1 or claim 2 **characterised in that** the flexible portion (26) of material with the lower coefficients of friction comprises a particularly tear-resistant and/or wear-resistant synthetic fibre cloth.

4. A round bale press according to claim 3 **characterised in that** the flexible portion (26) of material is substantially inelastic.

5. A round bale press according to claim 3 or claim 4 **characterised in that** the flexible portion (26) of material overall or the cloth fibres thereof have a friction-reducing coating.

6. A round bale press according to one of the preceding claims **characterised in that** the portion (26) of material which is longitudinally elastic at least in the longitudinal direction of the guide arrangement (22) comprises rubber or another elastic cloth.

7. A round bale press according to one of the preceding claims **characterised in that** the adjoining regions of the portions (24, 26) of material of the guide arrangement (22) are fixed together in overlapping relationship.

8. A round bale press according to one of the preceding claims **characterised in that** the portions (24, 26) of material are fixed at the ends to angle profile members (28).

9. A round bale press according to one of the preceding claims **characterised in that** the flexible portion (26) of material is arranged in the region of wrapping around the roller (14).

10. A round bale press according to one of the preceding claims **characterised in that** the guide arrangement (22) is adjustable by motor means.

11. A round bale press according to one of the preceding claims **characterised in that** the guide arrangement (22) can be tightened only at times.

## Revendications

1. Presse à balles rondes comportant un châssis principal (2), un train de roulement (4), des dispositifs de ramassage et d'alimentation (6) pour le produit à compresser, des moyens d'entraînement ainsi qu'une chambre de compression (10) ouvrante, qui est délimitée latéralement par des parois fixes et au niveau de sa périphérie au moins partiellement par des courroies sans fin (RB) et/ou des rouleaux, les courroies (RB) étant guidées sur des cylindres de renvoi (12, 14) rotatifs, ainsi qu'un dispositif de guidage (22) pour des moyens de liage (16, 18), qui est formé d'un matériau souple et entoure au moins partiellement l'un des cylindres de renvoi (14), **caractérisée en ce que** le dispositif de guidage (22) est en plusieurs parties et comprend au moins une portion (24) en un matériau présentant une élasticité longitudinale dans la direction longitudinale du dispositif de guidage (22), ainsi qu'au moins une portion (26) en un autre matériau souple, disposée sur le chemin de transport du moyen de liage (16, 18).

2. Presse à balles rondes selon la revendication 1, **caractérisée en ce que** la surface de la portion (26) en matériau souple présente un coefficient de frottement de surface inférieur à l'autre portion (24) de matériau.

3. Presse à balles rondes selon la revendication 1 ou 2, **caractérisée en ce que** la portion (26) de matériau souple à coefficient de frottement de surface plus faible est formée d'un tissu de fibres synthétiques particulièrement résistant à l'arrachement et/ou à l'usure.

4. Presse à balles rondes selon la revendication 3, **caractérisée en ce que** la portion (26) de matériau souple est essentiellement non élastique.

5. Presse à balles rondes selon la revendication 3 ou 4, **caractérisée en ce que** la portion (26) de matériau souple dans son ensemble ou les fibres de celle-ci présentent un revêtement qui diminue le coefficient de frottement.

6. Presse à balles rondes selon une des revendications précédentes, **caractérisée en ce que** la surface de la portion (24) de matériau qui présente une élasticité longitudinale au moins dans la direction longitudinale du dispositif de guidage (22) est en caoutchouc ou en un tissu élastique autre.

7. Presse à balles rondes selon une des revendications précédentes, **caractérisée en ce que** les zones aboutées des portions (24, 26) de matériau du dispositif de guidage (22) sont fixées les unes aux autres avec chevauchement.

8. Presse à balles rondes selon une des revendications précédentes, **caractérisée en ce que** les portions (24, 26) de matériau, à leur extrémité, sont fixées à des cornières (28).

9. Presse à balles rondes selon une des revendications précédentes, **caractérisée en ce que** la portion (26) de matériau souple est disposée dans la zone d'enroulement du rouleau (14).

10. Presse à balles rondes selon une des revendications précédentes, **caractérisée en ce que** le dispositif de guidage (22) peut être commandé par moteur.

11. Presse à balles rondes selon une des revendications précédentes, **caractérisée en ce que** le dispositif de guidage (22) peut être tendu seulement par instants.
